(19) Europäisches Patentamt
European Patent Office
Office européen des brevets

(11) **EP 3 454 513 B1**

(12) **FASCICULE DE BREVET EUROPEEN**

(45) Date de publication et mention
de la délivrance du brevet:
**13.05.2020 Bulletin 2020/20**

(51) Int Cl.:
***H04L 12/933*** *(2013.01)*      ***H04L 29/08*** *(2006.01)*

(21) Numéro de dépôt: **18193598.2**

(22) Date de dépôt: **11.09.2018**

(54) **RÉSEAU DE COMMUNICATION, SYSTÈME DE MESURE, MOYEN DE TRANSPORT ET PROCÉDÉ DE CONSTRUCTION D'UN RÉSEAU DE COMMUNICATION ASSOCIÉS**

KOMMUNIKATIONSNETZ, ENTSPRECHENDES MESSSYSTEM, TRANSPORTMITTEL UND ERSTELLUNGSVERFAHREN EINES KOMMUNIKATIONSNETZES

COMMUNICATION NETWORK, ASSOCIATED MEASUREMENT SYSTEM, TRANSPORT MEANS AND METHOD FOR CONSTRUCTING A COMMUNICATION NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2017 FR 1700911**

(43) Date de publication de la demande:
**13.03.2019 Bulletin 2019/11**

(73) Titulaire: **Thales**
**92400 Courbevoie (FR)**

(72) Inventeurs:
• **SEGURA, Eric**
**78851 Elancourt (FR)**

• **JULIÉ, Jean-Jacques**
**78851 Elancourt (FR)**

(74) Mandataire: **Lavoix**
**2, place d'Estienne d'Orves**
**75441 Paris Cedex 09 (FR)**

(56) Documents cités:
• **DAVE BUCKLEY: "New Monitoring Paradigms for Modern Avionics Buses", INTERNATIONAL TELEMETERING CONGRESS, 1 octobre 2013 (2013-10-01), pages 1-9, XP055482798,**
• **BRIAN GERY: "A FLEXIBLE SWITCHING ARCHITECTURE FOR DIVERSE SIGNAL TYPES", INTERNATIONAL TELEMETERING CONGRESS, 1 octobre 2007 (2007-10-01), XP055483284,**

EP 3 454 513 B1

**Description**

La présente invention concerne un réseau de communication du type s'étendant entre une pluralité de bloc d'entrée et une pluralité de blocs de sortie, chaque bloc d'entrée comprenant un nombre prédéterminé P1 de ports d'entrée et chaque bloc de sortie comprenant au moins le même nombre P2 de ports de sorties que le nombre prédéterminé P1 de ports d'entrée, le nombre prédéterminé P1 de ports d'entrée étant strictement supérieur à 1, le réseau comprenant une pluralité de commutateurs, chaque commutateur comprenant une première et une deuxième bornes d'entrée et une première et une deuxième bornes de sortie et étant propre à relier les première et deuxième bornes d'entrée respectivement aux première et deuxième bornes de sortie, ou inversement, en fonction d'un signal de commande respectif reçu par le commutateur.

La présente invention concerne également un système de mesure notamment pour moyen de transport, appelés génériquement porteurs, pouvant par exemple être notamment un aéronef, comprenant un tel réseau de communication.

La présente invention concerne également un moyen de transport, appelé génériquement porteur, tel qu'un aéronef, comprenant un tel système de mesure et un procédé de construction d'un tel réseau de communication.

Dans le domaine des réseaux de communication et notamment des réseaux de communication pour porteurs ou moyens de transport, il est connu d'utiliser des réseaux de communication reliant des blocs d'entrée, correspondant par exemple à des capteurs de mesure, à des blocs de sortie, correspondant par exemple à des calculateurs propres à traiter des données mesurées transmises par les capteurs de mesure. De telles données mesurées sont, par exemple, des données relatives à l'environnement du porteur et notamment à l'environnement électromagnétique du porteur. La présente invention est particulièrement applicable à la transmission de signaux numériques dits bruts issus des capteurs de mesure. Les signaux numériques comprennent par exemple des échantillons de données mesurées par des capteurs de type Radar ou d'écoute électromagnétique ou des flux vidéos bruts.

Un exemple de ce type de réseaux est fourni par la publication "New monitoring paradigms for modem avionics buses" de D. Buckley au Congrès International de Télémétrie de 2013.

Un autre exemple est fourni par la publication "A flexible switching architecture for diverse signal types" de B. Gery au Congrès International de Télémétrie de 2007.

De tels réseaux de communication sont relativement complexes afin de garantir notamment une certaine résistance aux pannes ou indisponibilités de certains blocs de sortie et une possibilité d'adaptation à une évolution du débit en sortie des blocs d'entrée en cas notamment d'évolution des performances des capteurs. Ces réseaux de communication permettent cependant d'assurer le routage de données entre les blocs d'entrée et les blocs de sortie de manière sécuritaire.

Il est notamment connu d'utiliser des réseaux de communication comprenant des matrices de routage dites systématiques, propres à router n'importe quel flux de données mesurées par un capteur de mesure vers n'importe quel calculateur. De telles matrices de routage comprennent plusieurs étages de commutateurs reliés entre eux, avec chaque commutateur, également appelé cross-bar, qui comprend une première et une deuxième bornes d'entrée et une première et une deuxième bornes de sortie. Chaque commutateur est propre à relier les première et deuxième bornes d'entrée respectivement aux première et deuxième bornes de sortie ou inversement en fonction d'un signal de commande reçu par le commutateur.

Dans de tels réseaux de communication, afin de les adapter à une évolution du débit en sortie des capteurs de mesure, il est connu de dupliquer la matrice de routage et de connecter en parallèle une pluralité de matrices de routage aux capteurs de mesure et aux calculateurs.

Cependant, de tels réseaux de communication ont une architecture complexe, conduisant notamment à des pertes d'énergie importantes à travers le réseau de communication et assurent une résistance aux pannes, notamment de commutateurs, limitée.

C'est à ces inconvénients qu'entend remédier l'invention en proposant un réseau de communication ayant une architecture simplifiée, limitant l'impact d'une indisponibilité d'un commutateur sur le fonctionnement du réseau et restant robuste aux pannes ou indisponibilités des blocs de sorties et à une évolution du débit des blocs d'entrée.

A cet effet, l'invention a pour objet un réseau de communication conforme à la revendication 1.

Grâce à l'invention le nombre de commutateurs du réseau de communication est minimisé et un seul étage de commutateurs est utilisé entre les blocs d'entrée et les blocs de sortie. Ainsi, l'architecture du réseau est simplifiée, et l'impact d'une indisponibilité d'un commutateur sur le fonctionnement du réseau est limité, car il n'existe pas de commutateurs dont une indisponibilité entrainerait une indisponibilité de communication avec un bloc d'entrée ou un bloc de sortie. En outre, la façon dont les commutateurs sont reliés aux différents blocs d'entrée et de sortie permet d'assurer que le réseau de communication reste robuste aux pannes ou indisponibilités des blocs de sorties et à une évolution de débit d'un flux de données transmis par les blocs d'entrée.

Suivant des modes particuliers de réalisation, l'invention présente l'une ou plusieurs des caractéristiques des revendications 2 à 5, prise(s) isolément ou suivant toute combinaison techniquement admissible.

L'invention a également pour objet un système de mesure conforme à l'une des revendications 6 à 8.

L'invention a, en outre, pour objet un porteur, notamment un aéronef qui comprend un système de mesure tel que défini ci-dessus.

L'invention a également pour objet un procédé de construction conforme à la revendication 10 ou 11.

L'invention sera mieux comprise à l'aide de la description qui va suivre, donnée uniquement à titre d'exemple non limitatif et faite en se référant aux dessins annexés sur lesquels :

- la figure 1 est une représentation schématique partielle d'un moyen de transport ou porteur, notamment d'un aéronef, comprenant un système de mesure incluant un premier exemple d'un réseau de communication conforme à l'invention ;
- la figure 2, est une représentation schématique d'une configuration du réseau de communication de la figure 1 dans un premier mode de fonctionnement du système de mesure ;
- la figure 3 est une représentation schématique simplifiée de la configuration du réseau de communication de la figure 1, dans un deuxième mode de fonctionnement du système de mesure,
- la figure 4 est une représentation schématique simplifiée de la configuration du réseau de communication de la figure 1, dans un troisième mode de fonctionnement du système de mesure,
- la figure 5 est une représentation schématique d'un système de mesure incluant un deuxième exemple d'un réseau de communication conforme à l'invention; et
- la figure 6 est un organigramme d'un procédé de construction d'un réseau de communication conforme à l'invention.

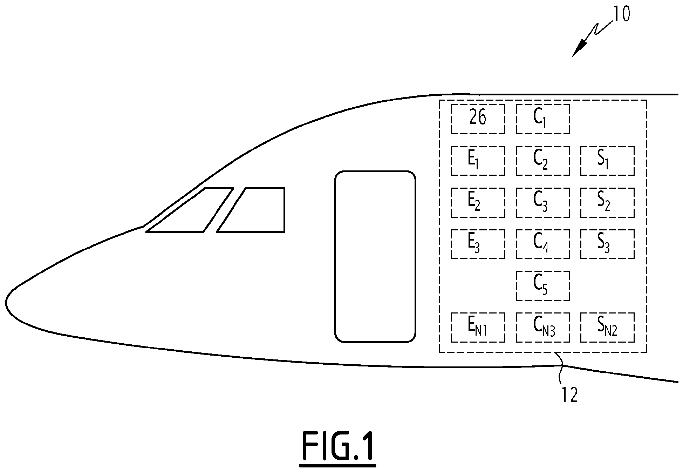

Le moyen de transport 10, également appelé porteur, représenté à la figure 1 correspond à un aéronef sur la figure 1 et est appelé aéronef ou porteur par la suite.

En variante, le porteur 10 est un véhicule autre qu'un aéronef, tel qu'un véhicule terrestre, marin ou sous-marin et notamment un train, une voiture ou un bateau.

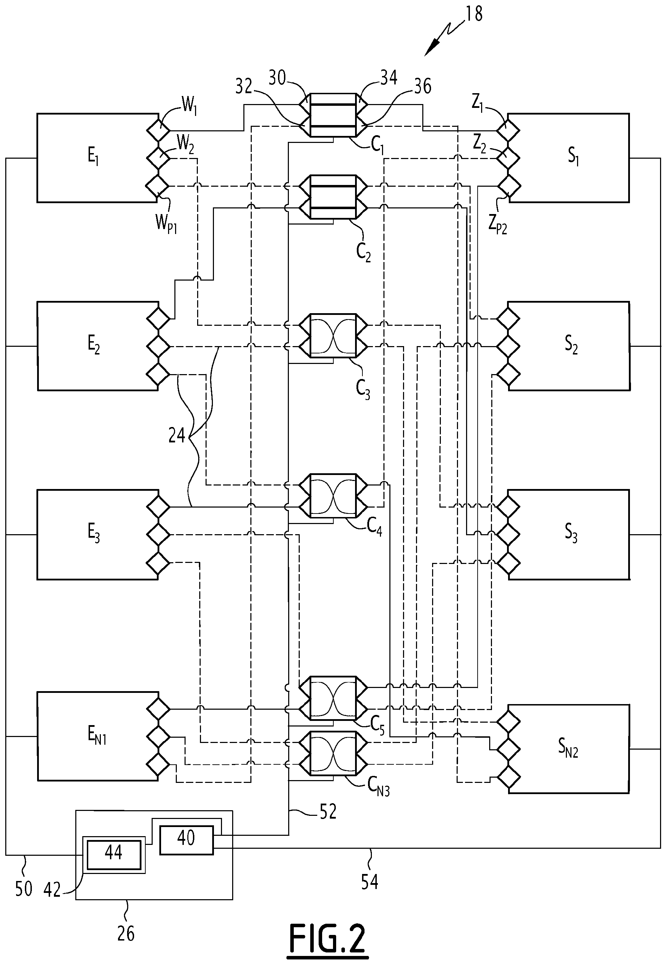

Le porteur 10 comprend un système de mesure 12 représenté plus en détails aux figures 2 à 4, propre à déterminer des paramètres relatifs à l'environnement dans lequel évolue le porteur, c'est-à-dire l'aéronef dans notre exemple.

Dans l'exemple de la figure 1, l'aéronef est par exemple un avion.

Les paramètres relatifs à l'environnement du porteur, c'est-à-dire de l'aéronef, sont notamment des paramètres relatifs à l'environnement électromagnétique du porteur. Les paramètres relatifs à l'environnement du porteur sont, par exemple, des paramètres indiquant la détection, la localisation et l'identification d'objets autour du porteur.

Le système de mesure 12 comprend une pluralité de blocs d'entrée $E_1,..., E_{N1}$, une pluralité de blocs de sortie $S_1,..., S_{N2}$ et un réseau de communication 18 s'étendant entre les blocs d'entrée $E_1,..., E_{N1}$ et les blocs de sortie $S_1,..., S_{N2}$.

Plus précisément, le système de mesure 12 comprend un nombre N1 de blocs d'entrée $E_1,..., E_{N1}$ et un nombre N2 de blocs de sortie $S_1,..., S_{N2}$.

Avantageusement, le nombre N1 de blocs d'entrée $E_1,..., E_{N1}$ est égal au nombre N2 de blocs de sortie $S_1,..., S_{N2}$.

Chaque bloc d'entrée $E_1,..., E_{N1}$ comprend un nombre prédéterminé P1 de ports d'entrée $W_1,...,W_{P1}$ strictement supérieur à 1.

Chaque bloc d'entrée $E_1,..., E_{N1}$ est propre à transmettre sur chaque port d'entrée un flux de données d'entrée ayant un débit d'entrée prédéterminé $q_1,..., q_{N1}$. Le débit d'entrée prédéterminé est propre à être différent pour chaque port d'entrée, toutefois, dans l'exemple considéré chaque bloc d'entrée $E_1,..., E_{N1}$ est propre à transmettre le même flux de données d'entrée respectif avec le même débit d'entrée sur chacun de ses ports d'entrée $W_1,...,W_{P1}$. Le nombre P1 de ports d'entrée pour chaque bloc d'entrée correspond alors au nombre de duplications possible du flux de données d'entrée. Les ports d'entrée $W_1,...,W_{P1}$ permettent d'assurer une redondance dans la transmission des données d'entrée aux blocs de sortie $S_1,..., S_{N2}$.

Les blocs d'entrée $E_1,..., E_{N1}$ sont, par exemple, des capteurs de mesure, tels que des capteurs de type vidéo ou Radar ou d'écoute électromagnétique, propres à mesurer des données relatives à l'environnement du porteur et notamment à l'environnement électromagnétique du porteur. Les données mesurées sont, par exemple, des signaux numériques dits bruts issus des capteurs de mesure. Les signaux numériques comprennent par exemple des échantillons de données mesurées par des capteurs de type Radar ou d'écoute électromagnétique ou des flux vidéos bruts mesurés par des capteurs vidéos.

Chaque bloc de sortie $S_1,..., S_{N2}$ comprend un nombre P2 de ports de sorties $Z_1,..., Z_{P2}$ supérieur ou égal au nombre prédéterminé P1 de ports d'entrée $W_1,...,W_{P1}$.

Chaque bloc de sortie $S_1,..., S_{N2}$ est propre à recevoir un flux de données de sortie ayant un débit de sortie maximal $Q_1,..., Q_{N2}$. Pour chaque bloc de sortie $S_1,..., S_{N2}$, le débit de sortie maximal associé vérifie l'inéquation, $Q_i \geq A \times q_M + R$, avec i un indice représentatif du bloc de sortie considéré, avec $q_M$ un maximum des débits d'entrée prédéterminés $q_1,..., q_{N1}$, A un entier strictement supérieur à 1 et R un réel strictement inférieur à $q_M$.

Avantageusement, chaque port de sortie $Z_1,..., Z_{P2}$ est propre à recevoir un flux de données ayant un débit maximal Q'$_{1,u}$,..., Q'$_{N2,u}$ vérifiant l'inéquation, Q'$_{i,u} \geq$ q$_M$, , avec i un indice représentatif du bloc de sortie considéré S$_1$,..., S$_{N2}$ et u un indice représentatif du port de sortie considéré.

Avantageusement encore, le système de mesure 12 est dimensionné et/ou les échanges dans le réseau de communication 18 sont temporisés de sorte qu'à chaque instant on a toujours :

$$\sum_{j=1}^{N_1} q_j < \sum_{i=1}^{N_2} Q_i ,$$

de préférence

$$\sum_{j=1}^{N_1} A \times q_j < \sum_{i=1}^{N_2} Q_i \quad \text{avec} \quad \sum_{j=1}^{N_1} (A+1) \times q_j > \sum_{i=1}^{N_2} Q_i .$$

Avantageusement encore, l'entier A est inférieur ou égal au nombre prédéterminé P1 de ports d'entrée W$_1$,...,W$_{P1}$, de préférence égal au nombre prédéterminé P1 de ports d'entrée. En répartissant de manière uniforme le débit d'entrée de chaque bloc d'entrée entre A ports d'entrée, chaque port de sortie de chaque bloc de sortie pourra recevoir avantageusement le débit de n'importe quel port d'entrée de n'importe quel bloc d'entrée.

Dans l'exemple des figures 2 à 4, le nombre N1 de blocs d'entrée est égal au nombre N2 de blocs de sortie et est égal à 4, tandis que le nombre P1 de ports d'entrée est égal au nombre P2 de ports de sortie et est égal à 3.

Avantageusement le nombre N1 de blocs d'entrée est supérieur ou égal à 3, de préférence supérieur ou égal à 4.

Les blocs de sortie S$_1$,..., S$_{N2}$ sont, par exemple, des organes de calcul, également appelés calculateurs, propres à déterminer les paramètres relatifs à l'environnement du porteur, c'est-à-dire de l'aéronef dans l'exemple de la figure 1, en fonction des données transmises par les blocs d'entrée E$_1$,..., E$_{N1}$ aux blocs de sortie S$_1$,..., S$_{N2}$ via le réseau de communication 18.

Le réseau de communication 18 comprend une pluralité de commutateurs C$_1$,..., C$_{N3}$, des liaisons de données 24 reliant entre eux les commutateurs, les blocs d'entrée et les blocs de sortie et un système 26 de commande des commutateurs.

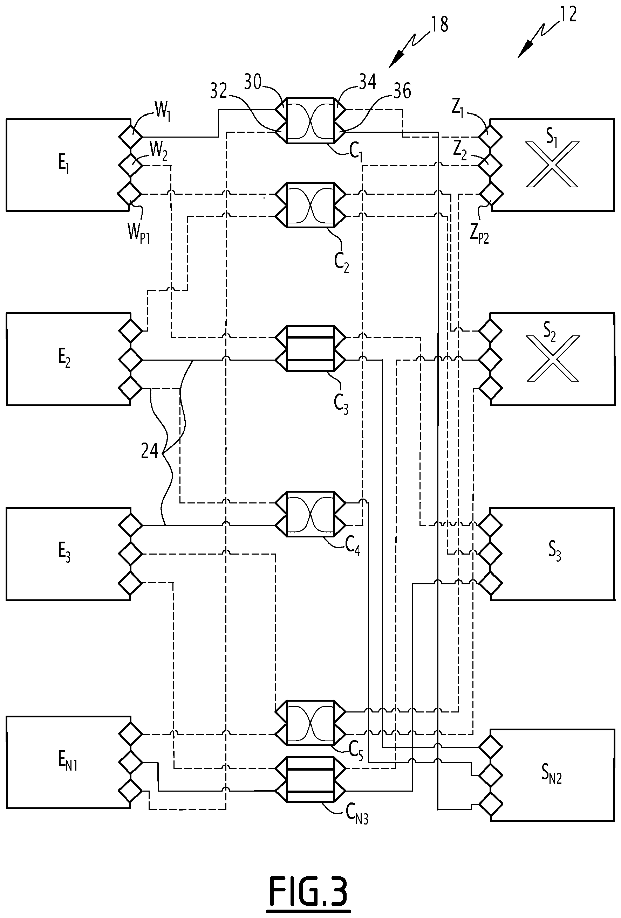

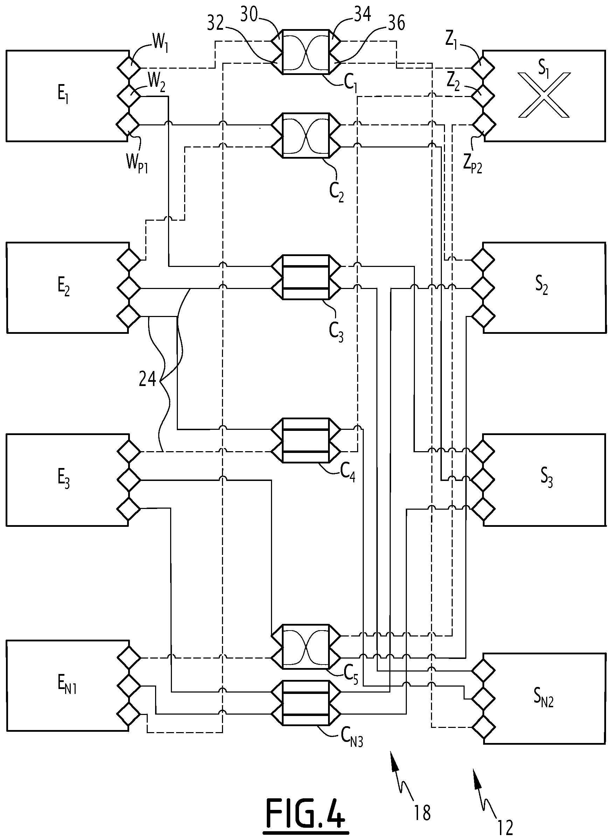

Il est à noter que le système de commande 26 n'est pas représenté sur les figures 3 et 4 pour des raisons de simplification des dessins.

Le réseau de communication 18 comprend un nombre total N3 de commutateurs.

Chaque commutateur C$_1$,..., C$_{N3}$ comprend une première 30 et une deuxième 32 bornes d'entrée et une première 34 et une deuxième 36 bornes de sortie.

Chaque commutateur C$_1$,..., C$_{N3}$ est propre à relier les première et deuxième bornes d'entrée respectivement aux première et deuxième bornes de sortie, ou inversement, en fonction d'un signal de commande respectif reçu par le commutateur.

En d'autres termes, chaque commutateur C$_1$,..., C$_{N3}$ est propre à relier les première et deuxième bornes d'entrée respectivement aux première et deuxième bornes de sortie, ou les première et deuxième bornes d'entrée respectivement aux deuxième et première bornes de sortie, en fonction d'un signal de commande respectif reçu par le commutateur.

Lorsqu'une borne d'entrée 30, 32 est reliée à une borne de sortie 34, 36, la borne d'entrée 30, 32 est propre à transmettre à la borne de sortie 34, 36 le flux de données d'entrée qu'elle reçoit en provenance de l'un des ports d'entrée W$_1$,...,W$_{P1}$ auquel elle est reliée par l'une des liaisons de données 24.

Le nombre N3 de commutateurs est fonction en plus du nombre N1 de blocs d'entrée, du nombre P1 de ports d'entrée.

Lorsque le résultat de la multiplication du nombre de ports d'entrée par le nombre de blocs d'entrée est pair, comme cela est par exemple représenté sur les figures 2 à 4 où le nombre de ports d'entrée est égal à 3 et le nombre de blocs d'entrée est égal à 4, le nombre N3 de commutateurs est égal à :

$$N3 = N1 \times \frac{P1}{2} . \qquad (1)$$

Ainsi, dans l'exemple des figures 2 à 4, le nombre de commutateurs est égal à 6.

Lorsque le résultat de la multiplication du nombre de ports d'entrée par le nombre de blocs d'entrée est impair, le nombre N3 de commutateurs est égal à :

$$N3 = \frac{N1 \times P1 - 1}{2} . \qquad (2)$$

Les liaisons de données 24 relient chacune respectivement une borne d'entrée 30, 32 à un port d'entrée $W_1,...,W_{P1}$ ou une borne de sortie 34, 36 à un port de sortie $Z_1,..., Z_{P2}$ ou un port d'entrée $W_1,...,W_{P1}$ à un port de sortie $Z_1,..., Z_{P2}$.

En d'autres termes, chaque port d'entrée $W_1,...,W_{P1}$ est connecté respectivement à une seule des liaisons de données 24, chaque port de sortie $Z_1,...,Z_{P2}$ est connecté respectivement à une seule des liaisons de données 24 et chaque borne d'entrée ou de sortie est connecté respectivement à une seule des liaisons de données 24.

Les liaisons de données 24 sont des liaisons physiques point à point.

Dans la suite de la description on entend par port d'entrée libre respectivement port de sortie libre, un port d'entrée respectivement de sortie non encore relié à une liaison de données 24. Inversement, on qualifie de non-libre un port d'entrée ou de sortie déjà relié à une liaison de données 24.

De même on entend par borne d'entrée libre respectivement borne de sortie libre, une borne d'entrée respectivement de sortie non encore reliée à une liaison de données 24. Inversement, on qualifie de non-libre une borne d'entrée ou de sortie déjà reliée à une liaison de données 24.

Le réseau de communication 18 vérifie, lorsque le résultat de la multiplication du nombre P1 de ports d'entrée par le nombre N1 de blocs d'entrée est impair, que l'un des ports d'entrée $W_1,...,W_{P1}$ de l'un des blocs d'entrée $E_1,..., E_{N1}$ est relié directement via une liaison de données 24 au port de sortie $Z_1,...,Z_{P2}$ de l'un des blocs de sortie. C'est-à-dire sans qu'un commutateur soit positionné entre ledit port d'entrée et ledit port de sortie.

Le réseau de communication 18 vérifie également que pour chaque commutateur $C_1,..., C_{N3}$, la première 30 et la deuxième 32 bornes d'entrée sont chacune reliées directement via une liaison de données respective 24 à des blocs d'entrée $E_1,..., E_{N1}$ différents et la première 34 et la deuxième 36 bornes de sortie sont chacune reliées directement via une liaison de données respective à des blocs de sortie $S_1,..., S_{N2}$ différents.

Plus précisément, le réseau de communication 18 vérifie que pour chaque commutateur, la première 30 et la deuxième 32 bornes d'entrée sont chacune reliées à l'un des ports d'entrée des blocs d'entrée et la première 34 et la deuxième 36 bornes de sortie sont chacune reliées à l'un des ports de sortie $Z_1,...,Z_{P2}$ des blocs de sortie.

La structure du réseau de communication 18 et notamment l'implémentation des liaisons de données 24 entre les commutateurs $C_1,..., C_{N3}$, les blocs d'entrée $E_1,..., E_{N1}$ et les blocs de sortie $S_1,..., S_{N2}$ sera expliquée plus en détails ci-dessous. Dans la description ci-dessous les références des éléments décrits sont données seulement à titre indicatif, afin de faciliter la compréhension et afin de décrire un mode de réalisation spécifique mais non limitatif de l'invention en s'appuyant sur les figures 2 à 4. Toutefois la description s'applique quelle que soit la référence des commutateurs, blocs d'entrée et blocs de sortie.

Plus précisément, en numérotant les blocs d'entrée $E_1,..., E_{N1}$ avec un indice j différent, c'est-à-dire de valeur différente, allant de 1 à N1 et les blocs de sorties avec un indice i différent allant de 1 à N2, avec N2 le nombre de blocs de sortie $S_1,..., S_{N2}$, et les commutateurs avec un indice m différent allant de 1 à N3, avec N3 le nombre total de commutateurs, le réseau de communication 18 respecte les règles suivantes afin de relier entre eux les blocs d'entrée $E_1,..., E_{N1}$, les blocs de sortie $S_1,..., S_{N2}$ et les commutateurs $C_1,..., C_{N3}$ via les liaisons de données 24 :

- un premier ensemble de P1 commutateurs $C_1, C_2, C_3$ est sélectionné suivant un ordre de numérotation des commutateurs,
- un deuxième ensemble de P1 blocs de sortie $S_1, S_2, S_3$ est sélectionné suivant un ordre de numérotation des blocs de sortie,
- les ports d'entrée $W_1,...,W_{P1}$ du bloc d'entrée $E_1$ ayant un indice j égal à 1, sont reliés respectivement à l'une des bornes d'entrée 30 d'un commutateur $C_1, C_2, C_3$ respectif du premier ensemble,
- l'une des bornes de sortie 34 de chaque commutateur $C_1, C_2, C_3$ du premier ensemble est reliée à l'un des ports de sortie $Z_1$ d'un bloc de sortie $S_1, S_2, S_3$ respectif du deuxième ensemble,
- pour chaque bloc d'entrée d'indice j allant de 2 à N1, considéré successivement :

  + un troisième ensemble de P1 commutateurs ayant au moins une borne d'entrée 30, 32 libre est sélectionné, en parcourant tous les commutateurs $C_1,...,C_{N3}$ un à un suivant leur ordre de numérotation, et avec un logique circulaire, en partant du commutateur ayant un indice m correspondant à l'indice j du bloc d'entrée $E_j$. On entend par logique circulaire le fait que lorsqu'on arrive au commutateur ayant l'indice i de valeur N3, le commutateur suivant est le commutateur ayant l'indice i de valeur 1,
  + les ports d'entrée du bloc d'entrée $E_j$ sont connectés respectivement à l'une des bornes d'entrée d'un commutateur respectif du troisième ensemble, et si le nombre de commutateurs du troisième ensemble est inférieur au nombre de ports d'entrée P1 du bloc d'entrée $E_j$, l'un des ports d'entrée libre du bloc d'entrée $E_j$ est connecté à un port de sortie libre de l'un des blocs de sortie,
  + pour chaque commutateur $C_1,...,C_{N3}$ du troisième ensemble, considéré successivement suivant l'ordre de numérotation des commutateurs en partant du commutateur ayant un indice m correspondant à l'indice j du bloc d'entrée $E_j$:

- si le commutateur a une seule borne de sortie 34, 36 déjà relié à l'un des blocs de sortie $S_1,..., S_{N2}$, l'autre borne de sortie du commutateur est connectée à un bloc de sortie suivant, par rapport à l'ordre de numérotation des blocs de sorties. Par suivant on entend le bloc de sortie dont la valeur de l'indice suit, suivant l'ordre de numérotation et avec une logique circulaire, la valeur de l'indice du bloc de sortie déjà relié au commutateur. On entend par logique circulaire le fait que lorsqu'on arrive au bloc de sortie ayant l'indice i de valeur N2, le bloc de sortie suivant est le bloc de sortie ayant l'indice i de valeur 1,
- si le commutateur est relié à aucun des blocs de sortie, l'une des bornes de sortie 34, 36 du commutateur est connectée à l'un des ports de sortie $Z_1,..., Z_{P2}$ du bloc de sortie $S_1,..., S_{N2}$ venant d'être relié à un commutateur appartenant au troisième ensemble lorsque ledit bloc de sortie $S_1,..., S_{N2}$ venant d'être relié à un commutateur appartenant au troisième ensemble a au moins un port de sortie libre, autrement l'une des bornes de sortie 34, 36 dudit commutateur est connectée à l'un des ports de sortie $Z_1,...,Z_{P2}$ du bloc de sortie $S_1,..., S_{N2}$ suivant, par rapport à l'ordre de numérotation des blocs de sorties, celui venant d'être relié à un commutateur appartenant au troisième ensemble.

En respectant les règles énoncées ci-dessus et en fixant le nombre de ports d'entrée et de sortie égal à 3 et le nombre de blocs d'entrée et de sortie égal à 4 on obtient le réseau de communication représenté aux figures 2 à 4.

Le système de commande 26 est configuré pour transmettre le signal de commande respectif à chaque commutateur $C_1,..., C_{N3}$ de sorte à commander la configuration du commutateur, c'est-à-dire la façon dont les bornes d'entrée sont reliées aux bornes de sortie au sein du commutateur $C_1,..., C_{N3}$.

Avantageusement, le système de commande 26 comprend un dispositif 40 de détection d'une indisponibilité et/ou panne des blocs de sortie et/ou des commutateurs et un dispositif 42 de commande, propre à transmettre chaque signal de commande à chaque commutateur en fonction notamment des indisponibilités/pannes détectées par le dispositif de détection 40.

Avantageusement encore, le dispositif de commande 42 comprend une unité de calcul 44 configurée pour calculer chaque signal de commande en fonction des indisponibilités/pannes détectées par le dispositif de détection 40.

Avantageusement encore, l'unité de calcul 44 est propre à recevoir, via par exemple une liaison de transmission de données 50, des données relatives au fonctionnement de chaque bloc d'entrée $E_1,..., E_{N1}$ et notamment relatives au nombre de ports d'entrée de chaque bloc d'entrée transmettant des données sur le réseau de communication 18. L'unité de calcul 44 est avantageusement configurée pour calculer chaque signal de commande en fonction également des données relatives au fonctionnement de chaque bloc d'entrée $E_1,..., E_{N1}$.

En variante, l'unité de calcul 44 est configurée pour mémoriser le nombre de blocs d'entrée et le nombre de ports d'entrée.

Le dispositif de détection 40 est, par exemple, propre à recevoir en provenance de chaque commutateur un premier message relatif à un état de fonctionnement du commutateur $C_1,..., C_{N3}$ et de préférence également en provenance de chaque bloc de sortie $S_1,..., S_{N2}$ un deuxième message relatif à un état de fonctionnement du bloc de sortie.

Le dispositif de détection est, par exemple, relié à chaque commutateur via une liaison d'échange de données 52 et à chaque bloc de sortie via une liaison de communication 54.

Les figures 2 à 4 illustrent les différences de configuration des commutateurs, c'est-à-dire la façon dont sont commandés les commutateurs via leur signal de commande respectif en cas respectivement d'un premier, d'un deuxième et d'un troisième modes de fonctionnement du système de mesure 12.

Sur les figures 2 à 4, les liaisons de données 24 sont représentées en traits continus lorsque des données sont transmises sur ces liaisons et en traits pointillés si aucune donnée ne transite sur ces liaisons.

Dans l'exemple de la figure 2, le système de mesure 12 est dans un premier mode de fonctionnement où l'ensemble des éléments du système de mesure 12 sont disponibles, c'est-à-dire en fonctionnement nominal, propres à échanger des données.

Dans l'exemple de la figure 2, chaque bloc d'entrée $E_1,..., E_{N1}$ est configuré pour transmettre un flux de données d'entrée seulement sur l'un de ses ports d'entrée $W_1,...,W_{P1}$.

Dans l'exemple de la figure 3, le système de mesure 12 est dans le deuxième mode de fonctionnement où deux des blocs de sortie $S_1, S_2$ du système de mesure 12 sont indisponibles ou en panne.

Le dispositif de détection 40 est alors propre à détecter lesdites indisponibilités/pannes et l'unité de calcul 44 est alors propre à déterminer le signal de commande de chaque commutateur pour transmettre les données d'entrée de chaque bloc d'entrée vers les blocs de sortie en fonctionnement nominal $S_3$ et $S_{N2}$.

En d'autres termes, le système de commande 26, commande les commutateurs $C_1,..., C_{N3}$ afin que les flux de données d'entrée soient transmis vers les blocs de sortie disponibles $S_3$ et SN2.

Dans le troisième mode de fonctionnement de la figure 4, le flux de données d'entrée des blocs d'entrée $E_1, E_2, E_3$ est dupliqué une fois ou la quantité de données transmis par les blocs d'entrée $E_1, E_2, E_3$ est doublée comparativement au premier mode de fonctionnement et le calculateur $S_1$ est indisponible/en panne.

Le système de commande 26 est alors propre à modifier les signaux de commande des commutateurs $C_1,...,$

$C_{N3}$ comparativement au premier mode de fonctionnement pour transmettre les données d'entrée de chaque bloc d'entrée vers les blocs de sortie en fonctionnement nominal $S_2$, $S_3$ et $S_{N2}$.

Ainsi, le système de mesure 12 est robuste aux augmentations de débit des blocs d'entrée $E_1$,..., $E_{N1}$ pour des raisons de redondance ou de quantité de données à transmettre et aux pannes/indisponibilités de blocs de sortie.

En d'autres termes les figures 2 à 4 illustrent notamment qu'en dupliquant A fois les signaux de chaque blocs d'entré il est possible à l'aide du réseau de communication 18 :

- d'être robuste à X pannes/indisponibilités de commutateurs ou de blocs de sortie, lorsque X vérifie l'inéquation suivante : $X \leq N1 - \dfrac{N1}{P1}$ , avec $X \leq A$; ou

- d'être robuste à une augmentation des débits de données en sortie de chaque bloc d'entrée et notamment à une multiplication par 2 des débits de données en sortie de chaque bloc d'entrée ; ou

- d'être robuste à X' pannes/indisponibilités de commutateurs ou de blocs de sortie et à une augmentation des débits d'entrée de chaque bloc d'entrée multiplié par 2, avec $(N1-X') \times P1 \geq N1 \times 2$.

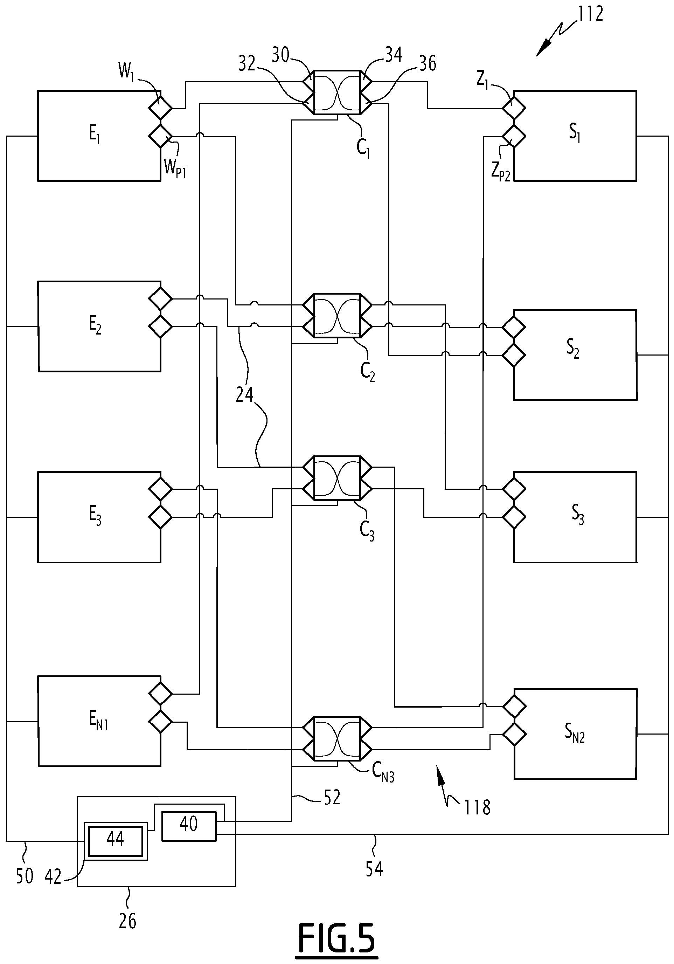

La figure 5 illustre un autre exemple d'un système de mesure 112 conforme à l'invention.

Dans la suite de la description et sur les dessins les mêmes références seront utilisées pour décrire les éléments communs entre les systèmes de mesure 12 et 112, sachant que les systèmes de mesure 12 et 112 diffèrent uniquement par le nombre de composants qu'ils utilisent, c'est-à-dire notamment le nombre de blocs d'entrée $E_1$,..., $E_{N1}$, le nombre de blocs de sortie $S_1$,..., $S_{N2}$ et le nombre de commutateurs $C_1$,..., $C_{N3}$.

Plus précisément, dans l'exemple de la figure 5, le nombre de blocs d'entrée N1 est égal au nombre de blocs de sortie N2 et est égal à 4, tandis que le nombre de ports d'entrée P1 est égal au nombre de ports de sortie P2 et est égal à 2.

Dans l'exemple de la figure 5, le nombre de commutateurs vérifie bien l'équation (1) donnée ci-dessus et est égal à 4.

La figure 5 illustre bien en comparaison avec les figures 2 à 4 que le nombre de commutateurs est fonction du nombre de blocs d'entrée et de ports d'entrée.

Le système de mesure 112 comprend un réseau de communication 118 obtenu en suivant les mêmes règles que celles énoncées ci-dessus pour le réseau de communication 18.

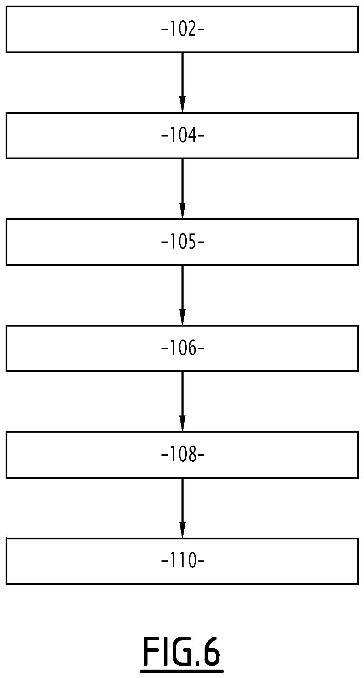

Le procédé de construction du réseau des figures 2 à 5 va désormais être présenté à l'aide de l'organigramme de la figure 6.

Le procédé comprend une première étape 102 de fourniture des N1 blocs d'entrée et des N2 blocs de sortie.

Ensuite, lors d'une deuxième étape 104 de fourniture, $N1 \times \dfrac{P1}{2}$ commutateurs $C_1$,..., $C_{N3}$ sont fournis, si le résultat de la multiplication du nombre de ports d'entrée par le nombre de blocs d'entrée est pair, tandis que si le résultat de la multiplication du nombre de ports d'entrée par le nombre de blocs d'entrée est impair, $\dfrac{N1 \times P1 - 1}{2}$ commutateurs $C_1$,..., $C_{N3}$ sont fournis.

Ensuite, lors d'une étape de liaison 105, exécutée uniquement si le résultat de la multiplication du nombre de ports d'entrée par le nombre de blocs d'entrée est impair, l'un des ports d'entrée de l'un des blocs d'entrée est relié directement via une liaison de données au port de sortie de l'un des blocs de sortie,

Puis, le procédé comprend pour chaque commutateur $C_1$,..., $C_{N3}$, une première étape 106 de connexion au cours de laquelle, les première 30 et deuxième 32 bornes d'entrée sont connectées directement via une liaison de données respective à des ports d'entrée libres de blocs d'entrée différents et une deuxième étape de connexion 108 au cours de laquelle, les première 34 et deuxième 36 bornes de sortie sont connectées directement via une liaison de données respective à des ports de sortie libres de blocs de sortie différents.

Plus précisément, en numérotant les blocs d'entrée $E_1$,..., $E_{N1}$ avec un indice j différent allant de 1 à N1, les blocs de sorties avec un indice i différent allant de 1 à N2 et les commutateurs avec un indice m différent allant de 1 à N3, le procédé comprend lors des étapes de liaison et de connexion des sous-étapes correspondant aux règles de connexion énoncés précédemment, afin de relier entre eux les blocs d'entrée, les blocs de sortie et les commutateurs via les liaisons de données 24.

Enfin, lors d'une étape finale 110, le système de commande 26 est relié aux commutateurs, et avantageusement aux blocs d'entrée et de sortie, afin de commander les commutateurs.

Les réseaux de communication 18, 118 présentent les mêmes avantages qui sont liés à leur architecture et à la possibilité de commander les commutateurs. Ils offrent notamment une grande robustesse aux pannes/indisponibilités de blocs de sortie ou de commutateurs et des possibilités améliorées de redondance et d'adaptation a une augmentation du débit de données fourni par les blocs d'entrée, ceci avec une complexité minimale dans la structure du réseau, notamment en termes de nombre de composants constituant le réseau.

Les modes de réalisation et variantes envisagés ci-dessus sont propres à être combinés entre eux pour donner lieu à d'autres modes de réalisation de l'invention.

**Revendications**

1. Réseau de communication (18, 118) s'étendant entre une pluralité de bloc d'entrée ($E_1$,..., $E_{N1}$) et une pluralité de blocs de sortie ($S_1$,...., $S_{N2}$),
chaque bloc d'entrée ($E_1$,..., $E_{N1}$) comprenant un nombre prédéterminé P1 de ports d'entrée ($W_1$,...,$W_{P1}$) et chaque bloc de sortie ($S_1$,...., $S_{N2}$) comprenant au moins le même nombre P2 de ports de sorties ($Z_1$,..., $Z_{P2}$) que le nombre prédéterminé P1 de ports d'entrée, le nombre prédéterminé P1 de ports d'entrée étant strictement supérieur à 1, le réseau comprenant une pluralité de commutateurs ($C_1$,..., $C_{N3}$), chaque commutateur ($C_1$,..., $C_{N3}$) comprenant une première (30) et une deuxième (32) bornes d'entrée et une première (34) et une deuxième (36) bornes de sortie et étant propre à relier les première (30) et deuxième (32) bornes d'entrée respectivement aux première (34) et deuxième (36) bornes de sortie, ou inversement, en fonction d'un signal de commande respectif reçu par le commutateur,
**caractérisé en ce que**

   - lorsque le résultat de la multiplication du nombre de ports d'entrée P1 par le nombre de blocs d'entrée N1 est pair, le nombre N3 de commutateurs est égal à : $N3 = N1 \times \dfrac{P1}{2}$, avec N1 le nombre de blocs d'entrée, et

   - lorsque le résultat de la multiplication du nombre de ports d'entrée P1 par le nombre de blocs d'entrée N1 est impair, le nombre N3 de commutateurs est égal à : $N3 = \dfrac{N1 \times P1 - 1}{2}$, et l'un des ports d'entrée de l'un des blocs d'entrée est relié directement via une liaison de données au port de sortie de l'un des blocs de sortie, et **en ce que** pour chaque commutateur ($C_1$,..., $C_{N3}$) la première (30) et la deuxième (32) bornes d'entrée sont chacune reliées directement via une liaison de données respective (24) à des blocs d'entrée ($E_1$,..., $E_{N1}$) différents et la première (34) et la deuxième (36) bornes de sortie sont chacune reliées directement via une liaison de données respective (24) à des blocs de sortie ($S_1$,..., $S_{N2}$) différents.

2. Réseau de communication (18, 118) selon la revendication 1, dans lequel pour chaque commutateur, la première (30) et la deuxième (32) bornes d'entrée sont reliées aux blocs d'entrée via l'un de leurs ports d'entrée ($W_1$,...,$W_{P1}$) et la première (34) et la deuxième (36) bornes de sortie sont reliées aux blocs de sortie via l'un de leurs ports de sortie ($Z_1$,..., $Z_{P2}$), et dans lequel chaque port d'entrée ($W_1$,...,$W_{P1}$) est connecté respectivement à une seule des liaisons de données (24) et chaque port de sortie ($Z_1$,..., $Z_{P2}$) est connecté respectivement à une seule des liaisons de donnée (24).

3. Réseau de communication selon l'une quelconque des revendications précédentes, dans lequel les liaisons de données (24) sont des liaisons physiques point à point.

4. Réseau de communication selon l'une quelconque des revendications précédentes, dans lequel en numérotant les blocs d'entrée ($E_1$,..., $E_{N1}$) avec un indice j différent allant de 1 à N1 et les blocs de sorties ($S_1$,..., $S_{N2}$) avec un indice i différent allant de 1 à N2, avec N2 le nombre de blocs de sortie ($S_1$,..., $S_{N2}$), et les commutateurs ($C_1$,.., $C_{N3}$) avec un indice m différent allant de 1 à N3, le nombre total de commutateurs, le réseau de communication (18, 118) respecte les règles suivantes afin de relier entre eux les blocs d'entrée ($E_1$,.., $E_{N1}$), les blocs de sortie ($S_1$,..., $S_{N2}$) et les commutateurs ($C_1$,..., $C_{N3}$) via les liaisons de données (24) :

   - un premier ensemble de P1 commutateurs ($C_1$,..., $C_{N3}$) est sélectionné parmi les commutateurs suivant un ordre de numérotation des commutateurs,
   - un deuxième ensemble de P1 blocs de sortie ($S_1$,..., $S_{N2}$) est sélectionné parmi les blocs de sortie suivant un ordre de numérotation des blocs de sortie,
- les ports d'entrée ($W_1$,...,$W_{P1}$) du bloc d'entrée ($E_j$) ayant un indice j égal à 1, sont reliés respectivement à l'une des bornes d'entrée (30, 32) d'un commutateur ($C_1$,..., $C_{N3}$) respectif du premier ensemble,
- l'une des bornes de sortie (34, 36) de chaque commutateur ($C_1$,..., $C_{N3}$) du premier ensemble est reliée à l'un des ports de sortie ($Z_1$,..., $Z_{P2}$) d'un bloc de sortie respectif du deuxième ensemble,
- pour chaque bloc d'entrée d'indice j allant de 2 à N1 considéré successivement :

+ un troisième ensemble de P1 commutateurs ($C_1$,..., $C_{N3}$) ayant au moins une borne d'entrée (30, 32) libre est sélectionné, en parcourant tous les commutateurs un à un suivant leur ordre de numérotation en partant du commutateur ayant un indice m correspondant à l'indice j du bloc d'entrée,
+ les ports d'entrée ($W_1$,...,$W_{P1}$) du bloc d'entrée ($E_j$) sont connectés respectivement à l'une des bornes d'entrée d'un commutateur respectif du troisième ensemble, et si le nombre de commutateurs du troisième ensemble est inférieur au nombre de ports d'entrée du bloc d'entrée, l'un des ports d'entrée libre ($W_1$,...,$W_{P1}$) du bloc d'entrée ($E_j$) est connecté à un port de sortie libre ($Z_1$,..., $Z_{P2}$) de l'un des blocs de sortie ($S_1$,....., $S_{N2}$),
+ pour chaque commutateur ($C_1$,..., $C_{N3}$) du troisième ensemble, considéré successivement suivant l'ordre de numérotation des commutateurs en partant du commutateur ayant un indice m correspondant à l'indice j du bloc d'entrée :

• si le commutateur ($C_1$,..., $C_{N3}$) a une seule borne de sortie déjà relié à l'un des blocs de sortie, l'autre borne de sortie du commutateur est connectée à un bloc de sortie suivant, par rapport à l'ordre de numérotation des blocs de sorties,
• si le commutateur ($C_1$,..., $C_{N3}$) est relié à aucun des blocs de sortie, l'une des bornes de sortie (34, 36) du commutateur est connectée à l'un des ports de sortie du bloc de sortie venant d'être relié à un commutateur ($C_1$,..., $C_{N3}$) appartenant au troisième ensemble lorsque ledit bloc de sortie venant d'être relié à un commutateur appartenant au troisième ensemble a au moins un port de sortie libre, autrement l'une des bornes de sortie (34, 36) dudit commutateur est connectée à l'un des ports de sortie ($Z_1$,..., $Z_{P2}$) du bloc de sortie ($S_1$,....., $S_{N2}$) suivant, par rapport à l'ordre de numérotation des blocs de sorties, celui venant d'être relié à un commutateur appartenant au troisième ensemble.

5. Réseau de communication selon l'une quelconque des revendications précédentes, dans lequel le réseau de communication (18, 118) comprend un dispositif (40) de détection d'indisponibilités des blocs de sortie ($S_1$;..., $S_{N2}$) et/ou des commutateurs ($C_1$,..., $C_{N3}$) et un dispositif (42) de commande propre à transmettre chaque signal de commande à chaque commutateur ($C_1$,..., $C_{N3}$), et dans lequel le dispositif de commande (42) comprend une unité de calcul (44) configurée pour calculer chaque signal de commande en fonction des indisponibilités détectées.

6. Système de mesure (12, 112), notamment pour un porteur, tel qu'un aéronef (10), comprenant une pluralité de blocs d'entrée ($E_1$,..., $E_{N1}$), tels que des capteurs de mesure, une pluralité de blocs de sortie ($S_1$,....., $S_{N2}$), tels que des organes de calcul, et un réseau de communication (18, 118) s'étendant entre les blocs d'entrée ($E_1$,..., $E_{N1}$) et les blocs de sortie ($S_1$,..., $S_{N2}$), **caractérisé en ce que** le réseau de communication (18, 118) est selon l'une quelconque des revendications précédentes.

7. Système de mesure (12, 112) selon la revendication 6, dans lequel chaque bloc d'entrée ($E_1$,..., $E_{N1}$) est propre à transmettre sur chaque port d'entrée ($W_1$,...,$W_{P1}$) un flux de données d'entrée ayant un débit d'entrée prédéterminé ($q_1$,..., $q_{N1}$) et chaque bloc de sortie ($S_1$,..., $S_{N2}$) est propre à recevoir un flux de données de sortie ayant un débit de sortie maximal ($Q_1$,..., $Q_{N2}$), et en ce que pour chaque bloc de sortie, le débit de sortie maximal ($Q_1$,..., $Q_{N2}$) associé vérifie l'inéquation, $Q_i \geq A \times q_M + R$, avec i un indice représentatif du bloc de sortie considéré, avec $q_M$ un maximum des débits d'entrée prédéterminés, A un entier strictement supérieur à 1 et R un réel strictement inférieur à $q_M$.

8. Système de mesure selon la revendication 7, dans lequel le nombre prédéterminé P1 de ports d'entrée ($W_1$,...,$W_{P1}$) vérifie l'inéquation suivante $P1 \leq A$.

9. Porteur (10), notamment aéronef, **caractérisé en ce qu'**il comprend un système de mesure (12, 112) selon l'une quelconque des revendications 6 à 8.

10. Procédé de construction d'un réseau de communication s'étendant entre une pluralité de bloc d'entrée ($E_1$,..., $E_{N1}$) et une pluralité de blocs de sortie ($S_1$,....., $S_{N2}$), chaque bloc d'entrée comprenant un nombre P1 prédéterminé de ports d'entrée ($W_1$,...,$W_{P1}$) et chaque bloc de sortie comprenant au moins le même nombre P2 de ports de sorties ($Z_1$,..., $Z_{P2}$) que le nombre P1 prédéterminé de ports d'entrée ($W_1$,...,$W_{P1}$), le nombre prédéterminé P1 de ports d'entrée étant strictement supérieur à 1, le procédé comprenant l'étape suivante :

- la fourniture (104) d'une pluralité de commutateurs ($C_1$,..., $C_{N3}$), chaque commutateur ($C_1$,..., $C_{N3}$) comprenant une première (30) et une deuxième (32) bornes d'entrée et une première (34) et une deuxième (36) bornes de sortie et étant propre à relier les première (30) et deuxième (32) bornes d'entrée respectivement aux première (34) et deuxième (36) bornes de sortie, ou inversement, en fonction d'un signal de commande respectif reçu par le commutateur,

**caractérisé en ce que**

- si le résultat de la multiplication du nombre de ports d'entrée par le nombre de blocs d'entrée est pair, le nombre N3 de commutateurs fourni lors de l'étape de fourniture est égal à : $N3 = N1 \times \dfrac{P1}{2}$, avec N1 le nombre de blocs d'entrée, et

- si le résultat de la multiplication du nombre de ports d'entrée par le nombre de blocs d'entrée est impair, le nombre N3 de commutateurs fourni lors de l'étape de fourniture est égal à $N3 = \dfrac{N1 \times P1 - 1}{2}$, en ce que lorsque le résultat de la multiplication du nombre P1 de ports d'entrée par le nombre N1 de blocs d'entrée est impair, le procédé comprend une étape de liaison (105) au cours de laquelle l'un des ports d'entrée ($W_1$,...,$W_{P1}$) de l'un des blocs d'entrée ($E_1$,..., $E_{N1}$) est relié directement via une liaison de données au port de sortie ($Z_1$,..., $Z_{P2}$) de l'un des blocs de sortie ($S_1$;..., $S_{N2}$),
et **en ce que** le procédé comprend pour chaque commutateur ($C_1$,..., $C_{N3}$) les étapes suivantes:

- la connexion (106) directe de la première (30) et de la deuxième (32) bornes d'entrée via une liaison de données respective (24) à des blocs d'entrée différents, et
- la connexion (108) directe de la première (34) et de la deuxième (36) bornes de sortie via une liaison de données respective (24) à des blocs de sortie différents.

**11.** Procédé selon la revendication 10, dans lequel en numérotant les blocs d'entrée ($E_1$,..., $E_{N1}$) avec un indice j différent allant de 1 à N1 et les blocs de sorties avec un indice i différent allant de 1 à N2, avec N2 le nombre de blocs de sortie ($S_1$;..., $S_{N2}$), et les commutateurs avec un indice m différent allant de 1 à N3, le nombre total de commutateurs, le procédé comprend lors des étapes de liaison (105) et de connexion (106, 108) les sous-étapes suivantes, afin de relier entre eux les blocs d'entrée ($E_1$,..., $E_{N1}$), les blocs de sortie ($S_1$;..., $S_{N2}$) et les commutateurs ($C_1$,..., $C_{N3}$) via les liaisons de données (24) :

- un premier ensemble de P1 commutateurs ($C_1$,..., $C_{N3}$) est sélectionné parmi les commutateurs suivant un ordre de numérotation des commutateurs,
- un deuxième ensemble de P1 blocs de sortie ($S_1$,...., $S_{N2}$) est sélectionné parmi les blocs de sortie suivant un ordre de numérotation des blocs de sortie,
- les ports d'entrée ($W_1$,...,$W_{P1}$) du bloc d'entrée ($E_j$) ayant un indice j égal à 1, sont reliés respectivement à l'une des bornes d'entrée (30, 32) d'un commutateur ($C_1$,..., $C_{N3}$) respectif du premier ensemble,
- l'une des bornes de sortie (34, 36) de chaque commutateur ($C_1$,..., $C_{N3}$) du premier ensemble est reliée à l'un des ports de sortie ($Z_1$,..., $Z_{P2}$) d'un bloc de sortie respectif du deuxième ensemble,
- pour chaque bloc d'entrée d'indice j allant de 2 à N1 considéré successivement :

+ un troisième ensemble de P1 commutateurs ($C_1$,..., $C_{N3}$) ayant au moins une borne d'entrée (30, 32) libre est sélectionné, en parcourant tous les commutateurs un à un suivant leur ordre de numérotation en partant du commutateur ayant un indice m correspondant à l'indice j du bloc d'entrée,
+ les ports d'entrée ($W_1$,...,$W_{P1}$) du bloc d'entrée ($E_j$) sont connectés respectivement à l'une des bornes d'entrée d'un commutateur respectif du troisième ensemble, et si le nombre de commutateurs du troisième ensemble est inférieur au nombre de ports d'entrée du bloc d'entrée, l'un des ports d'entrée libre ($W_1$,...,$W_{P1}$) du bloc d'entrée ($E_j$) est connecté à un port de sortie libre ($Z_1$,..., $Z_{P2}$) de l'un des blocs de sortie ($S_1$;..., $S_{N2}$),
+ pour chaque commutateur ($C_1$,..., $C_{N3}$) du troisième ensemble, considéré successivement suivant l'ordre de numérotation des commutateurs en partant du commutateur ayant un indice m correspondant à l'indice j du bloc d'entrée :

> • si le commutateur ($C_1$,..., $C_{N3}$) a une seule borne de sortie déjà relié à l'un des blocs de sortie, l'autre borne de sortie du commutateur est connectée à un bloc de sortie suivant, par rapport à l'ordre de numérotation des blocs de sorties,
> • si le commutateur ($C_1$,..., $C_{N3}$) est relié à aucun des blocs de sortie, l'une des bornes de sortie (34, 36) du commutateur est connectée à l'un des ports de sortie du bloc de sortie venant d'être relié à un commutateur ($C_1$,..., $C_{N3}$) appartenant au troisième ensemble lorsque ledit bloc de sortie venant d'être relié à un commutateur appartenant au troisième ensemble a au moins un port de sortie libre, autrement l'une des bornes de sortie (34, 36) dudit commutateur est connectée à l'un des ports de sortie ($Z_1$,..., $Z_{P2}$) du bloc de sortie ($S_1$;..., $S_{N2}$) suivant, par rapport à l'ordre de numérotation des blocs de sorties, celui venant d'être relié à un commutateur appartenant au troisième ensemble.

**Patentansprüche**

1. Kommunikationsnetzwerk (18, 118), das sich zwischen einer Mehrzahl von Eingangsblöcken ($E_1$, ..., $E_{N1}$) und einer Mehrzahl von Ausgangsblöcken (S1, ..., $S_{N2}$) erstreckt,
wobei jeder Eingangsblock ($E_1$, ..., $E_{N1}$) eine vorgegebene Anzahl P1 von Eingangsports ($W_1$, ..., $W_{P1}$) und jeder Ausgangsblock ($S_1$, ..., $S_{N2}$) mindestens die gleiche Anzahl P2 von Ausgangsports ($Z_1$, ..., $Zp_2$) wie die vorgegebene Anzahl P1 von Eingangsports aufweist, wobei die vorgegebene Anzahl P1 von Eingangsports strikt größer als 1 ist, wobei das Netzwerk eine Mehrzahl von Schaltern ($C_1$, ..., $C_{N3}$) aufweist, wobei jeder Schalter ($C_1$, ..., $C_{N3}$) einen ersten (30) und einen zweiten (32) Eingangsanschluss und einen ersten (34) und einen zweiten (36) Ausgangsanschluss aufweist und geeignet ist, den ersten (30) und den zweiten (32) Eingangsanschluss mit dem ersten (34) bzw. dem zweiten (36) Ausgangsanschluss oder umgekehrt in Abhängigkeit von einem jeweiligen, von dem Schalter empfangenen Steuersignal zu verbinden,
**dadurch gekennzeichnet, dass**

- wenn das Ergebnis der Multiplikation der Anzahl der Eingangsports P1 mit der Anzahl der Eingangsblöcke N1 gerade ist, die Anzahl der Schalter N3 gleich ist zu: $N3 = N1 \times \dfrac{P1}{2}$, wobei N1 die Anzahl von Eingangsblöcken ist und
- wenn das Ergebnis der Multiplikation der Anzahl der Eingangsports P1 mit der Anzahl der Eingangsblöcke N1 ungerade ist, die Anzahl der Schalter N3 gleich ist zu: $N3 = N1 \times \dfrac{P1-1}{2}$, und einer der Eingangsports eines der Eingangsblöcke direkt über eine Datenverbindung mit dem Ausgangsport eines Ausgangsblocks verbunden ist, und dass für jeden Schalter ($C_1$, ..., $C_{N3}$) der erste (30) und der zweite (32) Eingangsanschluss beide direkt über eine jeweilige Datenverbindung (24) mit unterschiedlichen Eingangsblöcken ($E_1$, ..., $E_{N1}$) und der erste (34) und der zweite (36) Ausgangsanschluss beide direkt über eine jeweilige Datenverbindung (24) mit unterschiedlichen Ausgangsblöcken ($S_1$, ..., $S_{N2}$) verbunden sind.

2. Kommunikationsnetzwerk (18, 118) nach Anspruch 1, wobei für jeden Schalter der erste (30) und der zweite (32) Eingangsanschluss mit den Eingangsblöcken über einen ihrer Eingangsports ($W_1$, ...,$W_{P1}$) verbunden sind und der erste (34) und der zweite (36) Ausgangsanschluss mit den Ausgangsblöcken über einen ihrer Ausgangsports ($Z_1$, ..., $Zp_2$) verbunden sind und wobei jeder Eingangsport ($W_1$, ..., $W_{P1}$) jeweils nur mit einer der Datenverbindungen (24) und jeder Ausgangsport ($Z_1$, ...,$Zp_2$) jeweils nur mit einer der Datenverbindungen (24) verbunden ist.

3. Kommunikationsnetzwerk nach einem der vorhergehenden Ansprüche, wobei die Datenverbindungen (24) physikalische Punkt-zu-Punkt-Verbindungen sind.

4. Kommunikationsnetzwerk nach einem der vorhergehenden Ansprüche, wobei durch die Nummerierung der Eingangsblöcke ($E_1$, ..., $E_{N1}$) mit einem anderen Index j im Bereich von 1 bis N1 und der Ausgangsblöcke ($S_1$, ..., $S_{N2}$) mit einem anderen Index i im Bereich von 1 bis N2, wobei N2 die Anzahl der Ausgangsblöcke ($S_1$, ..., $S_{N2}$) ist, und der Schalter ($C_1$, ..., $C_{N3}$) mit einem anderen Index m von 1 bis N3, der Gesamtzahl der Schalter, das Kommunikationsnetzwerk (18, 118) die folgenden Regeln befolgt, um die Eingangsblöcke ($E_1$, ..., $E_{N1}$), die Ausgangsblöcke ($S_1$, ..., $S_{N2}$) und die Schalter ($C_1$, ..., $C_{N3}$) über die Datenverbindungen (24) miteinander zu verbinden:

- eine erste Gruppe von P1-Schaltern ($C_1$, ..., $C_{N3}$) wird aus den Schaltern in einer Nummerierungsreihenfolge der Schalter ausgewählt,
- eine zweite Gruppe von P1-Ausgabeblöcken ($S_1$, ..., $S_{N2}$) wird aus den Ausgabeblöcken in einer Nummerierungsreihenfolge der Ausgabeblöcke ausgewählt,
- die Eingangsports ($W_1$, ..., $W_{P1}$) des Eingangsblocks ($E_j$) mit einem Index j gleich 1 werden jeweils mit einem der Eingangsanschlüsse (30, 32) eines entsprechenden Schalters ($C_1$, ..., $C_{N3}$) der ersten Gruppe verbunden,
- einer der Ausgangsanschlüsse (34, 36) jedes Schalters ($C_1$, ..., $C_{N3}$) der ersten Gruppe wird mit einem der Ausgangsports ($Z_1$, ..., $Z_{p2}$) eines entsprechenden Ausgangsblocks der zweiten Gruppe verbunden,
- für jeden Eingangsblock mit dem Index j zwischen 2 und N1, die nacheinander betrachtet werden:

+ wird eine dritte Gruppe von P1-Schaltern ($C_1$, ..., $C_{N3}$) mit mindestens einem freien Eingangsanschluss (30, 32) ausgewählt, indem alle Schalter einzeln in ihrer Nummerierungsreihenfolge durchlaufen werden, beginnend mit dem Schalter mit einem Index m, der dem Index j des Eingangsblocks entspricht,
+ werden die Eingangsports ($W_1$, ..., $W_{P1}$) des Eingangsblocks ($E_j$) jeweils mit einem der Eingangsanschlüsse eines entsprechenden Schalters der dritten Gruppe verbunden, und wenn die Anzahl der Schalter der dritten Gruppe geringer ist als die Anzahl der Eingangsanschlüsse des Eingangsblocks, wird einer der freien Eingangsports ($W_1$, ..., $W_{P1}$) des Eingangsblocks ($E_j$) mit einem freien Ausgangsport ($Z_1$, ..., $Z_{p2}$) eines der Ausgangsblöcke ($S_1$, ..., $S_{N2}$) verbunden,
+ für jeden Schalter ($C_1$, ..., $C_{N3}$) der dritten Gruppe, nacheinander betrachtet in der Reihenfolge der Schalternummerierung, beginnend mit dem Schalter mit dem Index m, der dem Index j des Eingangsblocks entspricht:

• wenn der Schalter ($C_1$, ..., $C_{N3}$) einen einzigen Ausgangsanschluss hat, der bereits mit einem der Ausgangsblöcke verbunden ist, wird der andere Ausgangsanschluss des Schalters mit einem in Bezug auf die Nummerierungsreihenfolge der Ausgangsblöcke folgenden Ausgangsblock verbunden,
• wenn der Schalter ($C_1$, ..., $C_{N3}$) nicht mit einem der Ausgangsblöcke verbunden ist, wird einer der Ausgangsanschlüsse (34, 36) des Schalters mit einem der Ausgangsanschlüsse des Ausgangsblocks verbunden, der gerade mit einem Schalter ($C_1$, ..., $C_{N3}$) verbunden wurde, der zur dritten Gruppe gehört, wenn der Ausgangsblock, der gerade mit einem zur dritten Gruppe gehörenden Schalter verbunden wurde, mindestens einen freien Ausgangsanschluss aufweist, andernfalls wird einer der Ausgangsanschlüsse (34, 36) des Schalters mit einem der Ausgangsports ($Z_1$, ..., $Z_{p2}$) des Ausgangsblocks ($S_1$, ..., $S_{N2}$) verbunden, der in Bezug auf die Nummerierungsreihenfolge der Ausgangsblöcke demjenigen folgt, der gerade mit einem zur dritten Gruppe gehörenden Schalter verbunden wurde.

5. Kommunikationsnetzwerk nach einem der vorhergehenden Ansprüche, in dem das Kommunikationsnetzwerk (18, 118) eine Vorrichtung (40) zum Erfassen von Nicht-Verfügbarkeiten der Ausgangsblöcke ($S_1$, ..., $S_{N2}$) und/oder der Schalter ($C_1$, ..., $C_{N3}$) und eine Steuervorrichtung (42) aufweist, die dazu geeignet ist, jedes Steuersignal zu jedem Schalter ($C_1$, ..., $C_{N3}$) zu übertragen, und wobei die Steuervorrichtung (42) eine Berechnungseinheit (44) aufweist, die dazu eingerichtet ist, jedes Steuersignal in Übereinstimmung mit den erfassten Nicht-Verfügbarkeiten zu berechnen.

6. Messsystem (12, 112) nach Anspruch 6, insbesondere für einen Träger wie ein Flugzeug (10), aufweisend eine Mehrzahl von Eingangsblöcken ($E_1$, ..., $E_{N1}$), wie Messsensoren, eine Mehrzahl von Ausgangsblöcken ($S_1$, ..., $S_{N2}$), wie Berechnungselemente, und ein Kommunikationsnetzwerk (18, 118), das sich zwischen den Eingangsblöcken ($E_1$, ..., $E_{N1}$) und den Ausgangsblöcken ($S_1$, ..., $S_{N2}$) erstreckt, **dadurch gekennzeichnet, dass** das Kommunikationsnetzwerk (18, 118) einem der vorhergehenden Ansprüche entspricht.

7. Messsystem (12, 112) nach Anspruch 6, in dem jeder Eingangsblock ($E_1$, ..., $E_{N1}$) geeignet ist, an jeden Eingangsport ($W_1$, ..., $W_{P1}$) einen Eingangsdatenstrom mit einer vorgegebenen Eingangsrate ($q_1$, ..., $q_{N1}$) zu senden und jeder Ausgangsblock ($S_1$, ..., $S_{N2}$) geeignet ist, einen Ausgangsdatenstrom mit einer maximalen Ausgangsrate ($Q_1$, ..., $Q_{N2}$) zu empfangen, und dadurch, dass für jeden Ausgangsblock die zugehörige maximale Ausgangsrate ($Q_1$, ..., $Q_{N2}$) die Ungleichung
$Q_i \geq A \times q_M + R$ erfüllt, wobei i ein für den betrachteten Ausgangsblock repräsentativer Index ist, $q_M$ ein Maximum der vorgegebenen Eingangsraten, A eine ganze Zahl streng größer als 1 und R eine reelle Zahl streng kleiner als $q_M$ ist.

8. Messsystem nach Anspruch 7, bei dem die vorgegebene Anzahl $P_1$ der Eingangsports ($W_1$, ..., $W_{P1}$) die folgende Ungleichung erfüllt P1 ≤ A.

9. Träger (10), insbesondere Flugzeug, **dadurch gekennzeichnet, dass** er ein Messsystem (12, 112) nach einem der Ansprüche 6 bis 8 aufweist.

10. Verfahren zum Bilden eines Kommunikationsnetzwerks, das sich zwischen einer Mehrzahl von Eingangsblöcken ($E_1$, ..., $E_{N1}$) und einer Mehrzahl von Ausgangsblöcken ($S_1$, ..., $S_{N2}$) erstreckt,
wobei jeder Eingangsblock ($E_1$, ..., $E_{N1}$) eine vorgegebene Anzahl P1 von Eingangsports ($W_1$, ..., $W_{P1}$) und jeder Ausgangsblock mindestens die gleiche Anzahl P2 von Ausgangsports ($Z_1$, ..., $Z_{P2}$) wie die vorgegebene Anzahl P1 von Eingangsports ($W_1$, ..., $W_{P1}$) aufweist, wobei die vorgegebene Anzahl P1 von Eingangsports strikt größer als 1 ist, wobei das Verfahren den folgenden Schritt aufweist:

- das Bereitstellen (104) einer Mehrzahl von Schaltern ($C_1$, ..., $C_{N3}$), wobei jeder Schalter ($C_1$, ..., $C_{N3}$) einen ersten (30) und einen zweiten (32) Eingangsanschluss und einen ersten (34) und einen zweiten (36) Ausgangsanschluss aufweist und geeignet ist, den ersten (30) und den zweiten (32) Eingangsanschluss mit dem ersten (34) bzw. dem zweiten (36) Ausgangsanschluss oder umgekehrt in Abhängigkeit von einem jeweiligen, von dem Schalter empfangenen Steuersignal zu verbinden,

**dadurch gekennzeichnet, dass**

- wenn das Ergebnis der Multiplikation der Anzahl der Eingangsports mit der Anzahl der Eingangsblöcke gerade ist, die Anzahl der die Anzahl der Schalter N3 der im Bereitstellungsschritt (104) bereitgestellten Schalter N3

gleich ist zu: $N3 = N1 \times \dfrac{P1}{2}$, wobei N1 die Anzahl von Eingangsblöcken ist und

- wenn das Ergebnis der Multiplikation der Anzahl der Eingangsports P1 mit der Anzahl der Eingangsblöcke N1 ungerade ist, die Anzahl der Schalter N3 der im Bereitstellungsschritt bereitgestellten Schalter gleich ist zu:

$$N3 = N1 \times \frac{P1-1}{2},$$

und dadurch, dass wenn das Ergebnis der Multiplikation der Anzahl P1 der Eingangsports mit der Anzahl der Eingangsblöcke N1 ungerade ist, das Verfahren den Schritt des Verbindens (105) aufweist, bei dem einer der Eingangsports ($W_1$, ..., $W_{P1}$) eines Eingangsblocks ($E_1$, ..., $E_{N1}$) direkt über eine Datenverbindung mit dem Ausgangsport ($Z_1$, ..., $Z_{P2}$) eines der Ausgangsblöcke ($S_1$, ..., $S_{N2}$) verbunden wird
und dadurch, dass das Verfahren für jeden Schalter ($C_1$,..., $C_{N3}$) die folgenden Schritte aufweist:

- das direkte Koppeln (106) des ersten (30) und des zweiten (32) Eingangsanschlusses über eine entsprechende Datenverbindung (24) mit unterschiedlichen Eingangsblöcken und
- das direkte Koppeln (108) des ersten (34) und des zweiten (36) Ausgangsanschlusses über eine jeweilige Datenverbindung (24) mit unterschiedlichen Ausgangsblöcken.

11. Verfahren nach Anspruch 10, wobei durch die Nummerierung der Eingangsblöcke ($E_1$, ..., $E_{N1}$) mit einem anderen Index j im Bereich von 1 bis N1 und der Ausgangsblöcke ($S_1$, ..., $S_{N2}$) mit einem anderen Index i im Bereich von 1 bis N2, wobei N2 die Anzahl der Ausgangsblöcke ($S_1$, ..., $S_{N2}$) ist, und der Schalter ($C_1$, ..., $C_{N3}$) mit einem anderen Index m von 1 bis N3, der Gesamtzahl der Schalter, das Verfahren beim Schritt des Verbindens (105) und dem Schritt des Koppelns (106, 108) der folgenden Unterschritte, um die Eingangsblöcke ($E_1$, ..., $E_{N1}$), die Ausgangsblöcke ($S_1$, ..., $S_{N2}$) und die Schalter ($C_1$, ..., $C_{N3}$) über die Datenverbindungen (24) miteinander zu verbinden:

- eine erste Gruppe von P1-Schaltern ($C_1$, ..., $C_{N3}$) aus den Schaltern in einer Nummerierungsreihenfolge der Schalter ausgewählt wird,
- eine zweite Gruppe von P1-Ausgabeblöcken ($S_1$, ..., $S_{N2}$) aus den Ausgabeblöcken in einer Nummerierungsreihenfolge der Ausgabeblöcke ausgewählt wird,
- die Eingangsports ($W_1$, ..., $W_{P1}$) des Eingangsblocks ($E_j$) mit einem Index j gleich 1 jeweils mit einem der Eingangsanschlüsse (30, 32) eines entsprechenden Schalters ($C_1$, ..., $C_{N3}$) der ersten Gruppe verbunden werden,

- einer der Ausgangsanschlüsse (34, 36) jedes Schalters ($C_1$, ..., $C_{N3}$) der ersten Gruppe mit einem der Ausgangsports ($Z_1$, ..., $Zp_2$) eines entsprechenden Ausgangsblocks der zweiten Gruppe verbunden wird,
- für jeden Eingangsblock mit dem Index j zwischen 2 und N1, die nacheinander betrachtet werden:

+ eine dritte Gruppe von P1-Schaltern ($C_1$, ..., $C_{N3}$) mit mindestens einem freien Eingangsanschluss (30, 32) ausgewählt wird, indem alle Schalter einzeln in ihrer Nummerierungsreihenfolge durchlaufen werden, beginnend mit dem Schalter mit einem Index m, der dem Index j des Eingangsblocks entspricht,

+ die Eingangsports ($W_1$, ..., $W_{P1}$) des Eingangsblocks ($E_j$) jeweils mit einem der Eingangsanschlüsse eines entsprechenden Schalters der dritten Gruppe verbunden werden, und wenn die Anzahl der Schalter der dritten Gruppe geringer ist als die Anzahl der Eingangsanschlüsse des Eingangsblocks, einer der freien Eingangsports ($W_1$, ..., $W_{P1}$) des Eingangsblocks ($E_j$) mit einem freien Ausgangsport ($Z_1$, ..., $Zp_2$) eines der Ausgangsblöcke ($S_1$, ..., $S_{N2}$) verbunden wird,

+ für jeden Schalter ($C_1$, ..., $C_{N3}$) der dritten Gruppe, nacheinander betrachtet in der Reihenfolge der Schalternummerierung, beginnend mit dem Schalter mit dem Index m, der dem Index j des Eingangsblocks entspricht:

• wenn der Schalter ($C_1$, ..., $C_{N3}$) einen einzigen Ausgangsanschluss hat, der bereits mit einem der Ausgangsblöcke verbunden ist, der andere Ausgangsanschluss des Schalters mit einem in Bezug auf die Nummerierungsreihenfolge der Ausgangsblöcke folgenden Ausgangsblock verbunden wird,

• wenn der Schalter ($C_1$, ..., $C_{N3}$) nicht mit einem der Ausgangsblöcke verbunden ist, einer der Ausgangsanschlüsse (34, 36) des Schalters mit einem der Ausgangsanschlüsse des Ausgangsblocks verbunden wird, der gerade mit einem Schalter ($C_1$, ..., $C_{N3}$) verbunden wurde, der zur dritten Gruppe gehört, wenn der Ausgangsblock, der gerade mit einem zur dritten Gruppe gehörenden Schalter verbunden wurde, mindestens einen freien Ausgangsanschluss aufweist, andernfalls einer der Ausgangsanschlüsse (34, 36) des Schalters mit einem der Ausgangsports ($Z_1$, ..., $Zp_2$) des Ausgangsblocks ($S_1$, ..., $S_{N2}$) verbunden wird, der in Bezug auf die Nummerierungsreihenfolge der Ausgangsblöcke demjenigen folgt, der gerade mit einem zur dritten Gruppe gehörenden Schalter verbunden wurde.

## Claims

1. A communication network (18, 118) extending between a plurality of input blocks ($E_1$,..., $E_{N1}$) and a plurality of output blocks ($S_1$,..., SN2),
   each input block ($E_1$,..., $E_{N1}$) comprising a predetermined number P1 of input ports ($W_1$,..., $W_{P1}$) and each output block ($S_1$,..., $S_{N2}$) comprising at least the same number P2 of output ports ($Z_1$,..., $Z_{P2}$) as the predetermined number P1 of input ports, the predetermined number P1 of input ports being strictly greater than 1,
   the network comprising a plurality of switches ($C_1$,..., $C_{N3}$), each switch ($C_1$,..., $C_{N3}$) comprising a first (30) and second (32) input terminals and a first (34) and second (36) output terminals and being able to connect the first (30) and second (32) input terminals, respectively, to the first (34) and second (36) output terminals or vice versa, based on a command signal received by the switch,
   **characterized in that**

   - when the result of the multiplication of the number of input ports P1 by the number of input blocks N1 is even, the number N3 of switches is equal to: $N3 = N1 \times \dfrac{P1}{2}$ , with N1 the number of input blocks, and

   - when the result of the multiplication of the number of input ports P1 by the number of input blocks N1 is odd, the number N3 of switches is equal to: $N3 = \dfrac{N1 \times P1 - 1}{2}$ , and one of the input ports of one of the input blocks is connected directly via a data link to the output port of one of the output blocks,
   and **in that** for each switch ($C_1$,..., $C_{N3}$), the first (30) and second (32) input terminals are each connected directly via a respective data link (24) to different input blocks ($E_1$,..., $E_{N1}$) and the first (34) and second (36) output terminals are each connected directly via a respective data link (24) to different output blocks ($Si$,..., $S_{N2}$).

2. The communication network (18, 118) according to claim 1, wherein for each switch, the first (30) and second (32) input terminals are connected to the input blocks via one of their input ports ($W_1$,..., $W_{P1}$) and the first (34) and second (36) output terminals are connected to the output blocks via one of their output ports $(Z_1,..., Z_{P2})$, and wherein each input port $(W_1,...,W_{P1})$ is respectively connected to a single one of the data links (24) and each output port $(Z_1,..., Z_{P2})$ is respectively connected to a single one of the data links (24).

3. The communication network according to any one of the preceding claims, wherein the data links (24) are point-to-point physical links.

4. The communication network according to any one of the preceding claims, wherein by numbering the input blocks $(E_1,..., E_{N1})$ with a different index j going from 1 to N1 and the output blocks $(S_1,...., S_{N2})$ with a different index i going from 1 to N2, with N2 the number of output blocks $(S_1,...., S_{N2})$, and the switches $(C_1,..., C_{N3})$ with a different index m going from 1 to N3, the total number of switches, the communication network (18, 118) respects the following rules in order to connect the input blocks $(E_1,..., E_{N1})$, the output blocks $(S_1,..., S_{N2})$ and the switches $(C_1,..., C_{N3})$ to one another via the data links (24):

- a first set of P1 switches $(C_1,..., C_{N3})$ is selected from among the switches according to a numbering order of the switches,
- a second set of P1 output blocks $(S_1,..., S_{N2})$ is selected from among the output blocks according to a numbering order of the output blocks,
- the input ports $(W_1,...,W_{P1})$ of the input block $(E_j)$ having an index j equal to 1 are respectively connected to one of the input terminals (30, 32) of a respective switch $(C_1,..., C_{N3})$ of the first set,
- one of the output terminals (34, 36) of each switch $(C_1,..., C_{N3})$ of the first set is connected to one of the output ports $(Z_1,..., Z_{P2})$ of a respective output block of the second set,
- for each input block with index j going from 2 to N1 considered successively:

+ a third set of P1 switches $(C_1,..., C_{N3})$ having at least one free input terminal (30, 32) is selected, traveling over all of the switches one by one following their numbering order starting from the switch having an index m corresponding to the index j of the input block,
+ the input ports $(W_1,...,W_{P1})$ of the input block $(E_j)$ are respectively connected to one of the input terminals of a respective switch of the third set, and if the number of switches of the third set is below the number of input ports of the input block, one of the free input ports $(W_1,...,W_{P1})$ of the input block $(E_j)$ is connected to a free output port $(Z_1,..., Z_{P2})$ of one of the output blocks $(S_1,..., S_{N2})$,
+ for each switch $(C_1,..., C_{N3})$ in the third set, considered successively in the numbering order of the switches starting from the switch having an index m corresponding to the index j of the input block:

• if the switch $(C_1,..., C_{N3})$ has a single output block already connected to one of the output blocks, the other output terminal of the switch is connected to a following output block, relative to the numbering order of the output blocks,
• if the switch $(C_1,..., C_{N3})$ is connected to none of the output blocks, one of the output terminals (34, 36) of the switch is connected to one of the output ports of the output block that has just been connected to a switch $(C_1,..., C_{N3})$ belonging to the third set when said output block that has just been connected to a switch belonging to the third set has at least one free output port, otherwise one of the output terminals (34, 36) of said switch is connected to one of the output ports $(Z_1,..., Z_{P2})$ of the following output block $(S_1,..., S_{N2})$, relative to the numbering order of the output blocks, that which has just been connected to a switch belonging to the third set.

5. The communication network according to any one of the preceding claims, wherein the communication network (18, 118) comprises a device (40) for detecting downtime of the output blocks $(S_1,..., S_{N2})$ and/or switches $(C_1,..., C_{N3})$ and a command device (42) able to send each command signal to each switch $(C_1,..., C_{N3})$, and wherein the command device (42) comprises a computing unit (44) configured to compute each command signal as a function of the detected downtime.

6. A measuring system (12, 112) in particular for a carrier, such as an aircraft (10), comprising a plurality of input blocks $(E_1,..., E_{N1})$, such as measuring sensors, a plurality of output blocks $(S_1,..., S_{N2})$, such as computing members, and a communication network (18, 118) extending between the input blocks $(E_1,..., E_{N1})$ and the output blocks $(S_1,..., S_{N2})$, wherein the communication network (18, 118) is according to any one of the preceding claims.

7. The measuring system (12, 112) according to claim 6, wherein each input block $(E_1,..., E_{N1})$ is able to send, on each input port $(W_1,...,W_{P1})$, an input data stream having a predetermined input throughput $(q_1,..., q_{N1})$ and each output

block ($S_1$,...., $S_{N2}$) is able to receive an output data stream having a maximal output throughput ($Q_1$,..., $Q_{N2}$), and in that for each output block, the associated maximum output throughput ($Q_1$,..., $Q_{N2}$) verifies the inequality $Q_i \geq A \times q_M + R$, with i an index representative of the output block in question, with $q_M$ a maximum of the predetermined input throughputs, A an integer strictly greater than 1 and R a real number strictly less than $q_M$.

8. The measuring system according to claim 7, wherein the predetermined number P1 of input ports ($W_1$,...,$W_{P1}$) verifies the following inequality: P1≤A.

9. A carrier (10), in particular an aircraft, **characterized in that** it comprises a measuring system (12, 112) according to any one of claims 6 to 8.

10. A method for building a communication network extending between a plurality of input blocks ($E_1$,..., $E_{N1}$) and a plurality of output blocks ($S_1$,....., $S_{N2}$),
each input block comprising a predetermined number P1 of input ports ($W_1$,..., $W_{P1}$) and each output block comprising at least the same number P2 of output ports ($Z_1$,..., $Z_{P2}$) as the predetermined number P1 of input ports ($W_1$,...,$W_{P1}$), the predetermined number P1 of input ports being strictly greater than 1,
the method comprising the following step:

   - providing (104) a plurality of switches ($C_1$,..., $C_{N3}$), each switch ($C_1$,..., $C_{N3}$) comprising a first (30) and second (32) input terminals and a first (34) and second (36) output terminals and being able to connect the first (30) and second (32) input terminals, respectively, to first (34) and second (36) output terminals or vice versa, based on a command signal received by the switch,

   **characterized in that**

   - if the result of the multiplication of the number of input ports by the number of input blocks is even, the number N3 of switches provided during the provision step is equal to: $N3 = N1 \times \dfrac{P1}{2}$, with N1 the number of input blocks, and
   - if the result of the multiplication of the number of input ports by the number of input blocks is odd, the number N3 of switches provided during the provision step is equal to: $N3 = \dfrac{N1 \times P1 - 1}{2}$, in that when the result of the multiplication of the number P1 of input ports by the number N1 of input blocks is odd, the method comprises a linking step (105) during which one of the input ports ($W_1$,...,$W_{P1}$) of one of the input blocks ($E_1$,..., $E_{N1}$) is connected directly via a data link to the output port ($Z_1$,..., $Z_{P2}$) of one of the output blocks ($S_1$,..., $S_{N2}$), and **in that** the method comprises, for each switch ($C_1$,..., $C_{N3}$), the following steps:

      - the direct connection (106) of the first (30) and second (32) input terminals via a respective data link (24) to different input blocks, and
      - the direct connection (108) of the first (34) and second (36) output terminals via a respective data link (24) to different output blocks.

11. The method according to claim 10, wherein by numbering the input blocks ($E_1$,..., $E_{N1}$) with a different index j going from 1 to N1 and the output blocks ($S_1$,....., $S_{N2}$) with a different index i going from 1 to N2, with N2 the number of output blocks, and the switches with a different index m going from 1 to N3, the total number of switches, the method comprises, during the linking (105) and connection (106, 108) steps, the following sub-steps, in order to connect the input blocks ($E_1$,..., $E_{N1}$), the output blocks ($S_1$,..., $S_{N2}$) and the switches ($C_1$,..., $C_{N3}$) to one another via the data links (24):

   - a first set of P1 switches ($C_1$,..., $C_{N3}$) is selected from among the switches according to a numbering order of the switches,
   - a second set of P1 output blocks ($S_1$,....., $S_{N2}$) is selected from among the output blocks according to a numbering order of the output blocks,
   - the input ports ($W_1$,...,$W_{P1}$) of the input block ($E_j$) having an index j equal to 1 are respectively connected to one of the input terminals (30, 32) of a respective switch ($C_1$,..., $C_{N3}$) of the first set,

- one of the output terminals (34, 36) of each switch ($C_1$,..., $C_{N3}$) of the first set is connected to one of the output ports ($Z_1$,..., $Z_{P2}$) of a respective output block of the second set,
- for each input block with index j going from 2 to N1 considered successively:

+ a third set of P1 switches ($C_1$,..., $C_{N3}$) having at least one free input terminal (30, 32) is selected, traveling over all of the switches one by one following their numbering order starting from the switch having an index m corresponding to the index j of the input block,

+ the input ports ($W_1$,...,$W_{P1}$) of the input block ($E_j$) are respectively connected to one of the input terminals of a respective switch of the third set, and if the number of switches of the third set is below the number of input ports of the input block, one of the free input ports ($W_1$,...,$W_{P1}$) of the input block ($E_j$) is connected to a free output port ($Z_1$,..., $Z_{P2}$) of one of the output blocks ($S_1$,..., SN2),

+ for each switch ($C_1$,..., $C_{N3}$) in the third set, considered successively in the numbering order of the switches starting from the switch having an index m corresponding to the index j of the input block:

• if the switch ($C_1$,..., $C_{N3}$) has a single output block already connected to one of the output blocks, the other output terminal of the switch is connected to a following output block, relative to the numbering order of the output blocks,

• if the switch ($C_1$,..., $C_{N3}$) is connected to none of the output blocks, one of the output terminals (34, 36) of the switch is connected to one of the output ports of the output block that has just been connected to a switch ($C_1$,..., $C_{N3}$) belonging to the third set when said output block that has just been connected to a switch belonging to the third set has at least one free output port, otherwise one of the output terminals (34, 36) of said switch is connected to one of the output ports ($Z_1$,..., $Z_{P2}$) of the following output block ($S_1$,..., $S_{N2}$), relative to the numbering order of the output blocks, that which has ust been connected to a switch belonging to the third set.

FIG.1

## FIG.2

## FIG.3

**FIG.4**

## FIG.5

```
┌─────────────────────────────┐
│            -102-            │
└─────────────────────────────┘
               │
               ▼
┌─────────────────────────────┐
│            -104-            │
└─────────────────────────────┘
               │
               ▼
┌─────────────────────────────┐
│            -105-            │
└─────────────────────────────┘
               │
               ▼
┌─────────────────────────────┐
│            -106-            │
└─────────────────────────────┘
               │
               ▼
┌─────────────────────────────┐
│            -108-            │
└─────────────────────────────┘
               │
               ▼
┌─────────────────────────────┐
│            -110-            │
└─────────────────────────────┘
```

## FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. BUCKLEY.** New monitoring paradigms for modem avionics buses. *Congrès International de Télémétrie,* 2013

- **B. GERY.** A flexible switching architecture for diverse signal types. *Congrès International de Télémétrie,* 2007